Europäisches Patentamt

European Patent Office

Office européen des brevets

(19)

(11) Numéro de publication: **0 236 644**
**B1**

(12) **FASCICULE DE BREVET EUROPEEN**

(45) Date de publication du fascicule du brevet:
27.06.90

(51) Int. Cl.⁵: **H02G 5/08**

(21) Numéro de dépôt: **86402769.3**

(22) Date de dépôt: **11.12.86**

(54) **Dispositif pour établir une connexion électrique sectionnable entre un conducteur plat fixe et une barre omnibus et bloc de prise de courant et de sectionnement comportant une pluralité de tels dispositifs.**

(30) Priorité: **05.02.86 FR 8601559**

(43) Date de publication de la demande:
**16.09.87 Bulletin 87/38**

(45) Mention de la délivrance du brevet:
**27.06.90 Bulletin 90/26**

(84) Etats contractants désignés:
**AT BE CH DE ES GB IT LI NL**

(56) Documents cités:
**FR-A- 1 166 395**

(73) Titulaire: **TELEMECANIQUE, 43-45, Boulevard Franklin Roosevelt, F-92504 Rueil-Malmaison Cedex(FR)**

(72) Inventeur: **Jego, Gérard, 12, rue Louis Pasteur, F-21470 Brazey en Plaine(FR)**
Inventeur: **Thierry, Jean-Pierre, 36, rue des Espaces Verts, F-21560 Couternon(FR)**
Inventeur: **Verdenne, Serge, 7, rue du Potet, F-21120 Marcilly sur Tille(FR)**

(74) Mandataire: **Marquer, Francis et al, Cabinet Moutard 35, Avenue Victor Hugo, F-78960 Voisins le Bretonneux(FR)**

## Description

La présente invention concerne un dispositif à pince de contact destiné à établir une connexion électrique sectionnable entre une barre omnibus de section rectangulaire, disposée à plat ou de chant, et un conducteur plat rigide placé en regard de la barre, dans un même plan. Elle concerne également un bloc de prise de courant et de sectionnement associé à un jeu de barres de distribution pour appareils électriques interrupteurs et équipé d'une pluralité de ces pinces de contact.

Dans le cadre d'un système de distribution de courant à barres omnibus parallèles non coplanaires, verticales par exemple, pour appareils interrupteurs, il est connu de réaliser chaque organe de prise de courant et de sectionnement sous forme d'un bloc moulé en matière isolante comprenant, d'une part, une partie mobile en translation constituée par un coulisseau portant des pinces conductrices embrochables sur les barres de distribution et débrochables de celles-ci et, d'autre part, une partie fixe munie de couteaux conducteurs disposés de chant dont l'une des extrémités est engagée entre les deux branches de la pince associée et dont l'autre extrémité est fixée à des moyens associés de raccordement électrique aux appareils interrupteurs; le mouvement de translation du coulisseau porte-pinces est produit sous l'action d'un organe de commande pour assurer le prélèvement de courant sur les barres et respectivement le sectionnement.

On connaît déjà diverses structures de pinces de ce genre (voir par exemple FR-A 1 166 395) assurant une liaison électrique sectionnable entre une barre omnibus et un couteau conducteur plat fixe situé dans le plan de la barre, à distance de celle-ci. L'une d'elles se compose de deux languettes conductrices plates symétriques disposées en regard l'une de l'autre; ces deux languettes sont logées et maintenues dans une cavité traversante ménagée dans le coulisseau isolant, lequel est disposé parallèlement à la barre et au couteau. Cette pince est d'autre part profilée de telle manière qu'en position embrochée, l'une de ses extrémités est engagée sur la barre par écartement de ses branches à l'encontre d'une force élastique de serrage exercée par un ressort de compression reliant lesdites branches entre elles, tandis que son autre extrémité est montée en appui glissant contre le couteau en étant soumise à un effort exercé par un organe de serrage approprié.

Pour passer de la position embrochée à la position sectionnée, le coulisseau est entraîné en translation de telle sorte que l'une des extrémités de la pince se sépare de la barre par débrochage, tandis que son autre extrémité maintenue en appui sur le couteau se déplace par glissement le long de celui-ci; lors de ce mouvement de sectionnement, la pince se déplace donc en translation sur une course totale qui est égale à la somme de sa course de débrochage de la barre et de la course de sectionnement proprement dite, cette dernière correspondant à une distance donnée séparant la pince de la barre et étant supérieure à la course de débrochage.

Toutefois, ce type de pince double permettant d'établir une liaison électrique sectionnable présente des inconvénients. En effet, étant donné qu'au cours du mouvement de sectionnement, la pince se déplace en translation en étant en appui glissant sur le couteau fixe, il se crée donc d'importantes forces de frottement sur le couteau, et ce, sur toute la course de la pince; dès lors, pour un nombre élevé de manoeuvres d'embrochage/débrochage, ce frottement prononcé se traduit par une usure rapide du couteau et une détérioration du contact associé.

La présente invention a en particulier pour but de réduire la course de frottement de ce type de pince sur le couteau fixe lors du mouvement de sectionnement (ou de réarmement) par translation de la pince, ce frottement s'établissant non plus sur toute la course de la pince comme dans l'art antérieur, mais désormais uniquement sur sa course de débrochage (ou d'embrochage) de la barre.

A cet effet, selon l'invention, le dispositif correspondant au préambule de la revendications 1 est caractérisé en ce que les deux branches de la pince sont entretoisées et maintenues écartées l'une de l'autre par un étrier contre lequel elles prennent appui par basculement produit sous l'action du ressort après débrochage de la pince par translation, de sorte qu'en position de sectionnement, les deux parties des branches de la pince situées du côté de la seconde extrémité sont disposées de part et d'autre du couteau sans coopérer avec celui-ci.

On comprend qu'ainsi chaque branche de la pince forme un double levier ayant un point d'appui commun constitué par l'étrier, de sorte qu'après son débrochage de la barre, la pince prend désormais appui sur l'étrier et se trouve en équilibre stable, sans frottement sur le couteau.

Un autre but de l'invention consiste à diminuer l'effort de frottement exercé sur le couteau durant la course de débrochage de la pince lors du mouvement de sectionnement.

A cet effet, selon une particularité de l'invention, les deux branches de la pince sont reliées entre elles par deux ressorts de compression qui sont disposés de part et d'autre de l'étrier et qui sont associés respectivement aux deux extrémités de la pince en exerçant sur chacune d'elles, seulement en position embrochée, le même effort de pression de contact.

Selon un autre aspect de l'invention, les deux branches de la pince présentent chacune un profil dissymétrique par rapport au plan médian de l'étrier; dans cette configuration, les deux ressorts possèdent des caractéristiques dimensionnelles différentes permettant à la pince, après son débrochage, d'être en équilibre stable sans contact avec le couteau.

L'invention vise également un bloc de prise de courant et de sectionnement associé à un jeu de barres de distribution et équipé d'une pluralité de ces pinces perfectionnées du type décrit précédemment.

D'autres avantages de l'invention apparaîtront mieux dans la description détaillée qui suit et se réfère aux dessins annexés donnés uniquement à titre d'exemple et dans lesquels :

Les figures 1 et 2 représentent une vue de dessus partielle du dispositif à pince conforme à l'invention, en position embrochée et respectivement en position sectionnée ;

La figure 3 représente une vue de dessus de la pince de contact ;

La figure 4 représente une vue selon la flèche IV de la figure 3 ;

La figure 5 représente l'étrier servant d'entretoise à la pince ; et

La figure 6 représente une vue de dessus partielle en coupe d'une colonne de barres de distribution associée à un bloc de prise de courant et de sectionnement équipé d'un dispositif à pinces multiples conforme à l'invention, ce dernier étant illustré en position embrochée sur les barres.

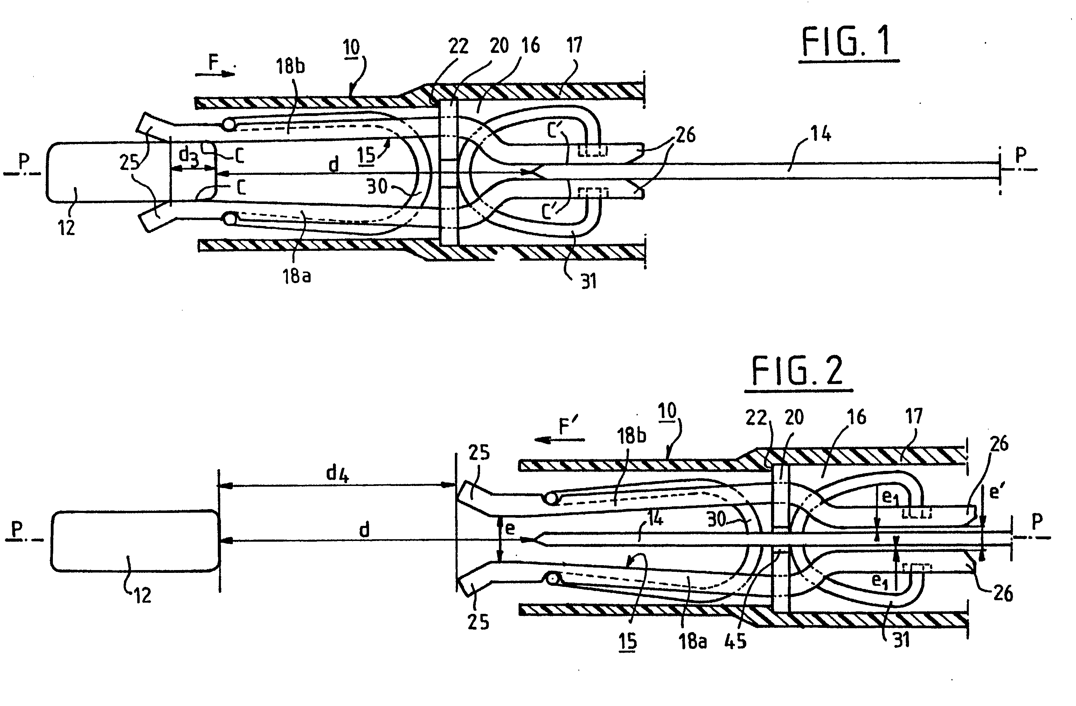

Sur les figures 1 et 2, on a représenté en 10 un dispositif à pince conductrice, conforme à l'invention, destiné à établir une connexion électrique sectionnable entre une barre omnibus fixe 12 de section droite rectangulaire, disposée par exemple de chant, et un couteau conducteur plat fixe 14, par exemple en cuivre argenté, disposé également de chant et placé en regard de la barre 12, dans un même plan P - P, à une distance donnée d de celle-ci.

Il est à noter que la barre omnibus et le couteau conduteur peuvent également être tous deux disposés à plat, sans sortir du cadre de l'invention.

Le dispositif de connexion 10 se compose d'une pince d'embrochage repérée globalement en 15 qui est logée et maintenue à l'intérieur d'une cavité traversante 16 ménagée dans un coulisseau 17 en matière isolante présentant une forme générale de tulipe ; comme il apparaît sur les figures 1 et 2, le coulisseau 17 est agencé parallèlement au plan P - P et est susceptible de se déplacer en translation selon une direction parallèle à ce plan sous l'action d'un organe de commande quelconque (non figuré) pour passer d'une position embrochée (figure 1) à une position sectionnée (figure 2) et vice versa.

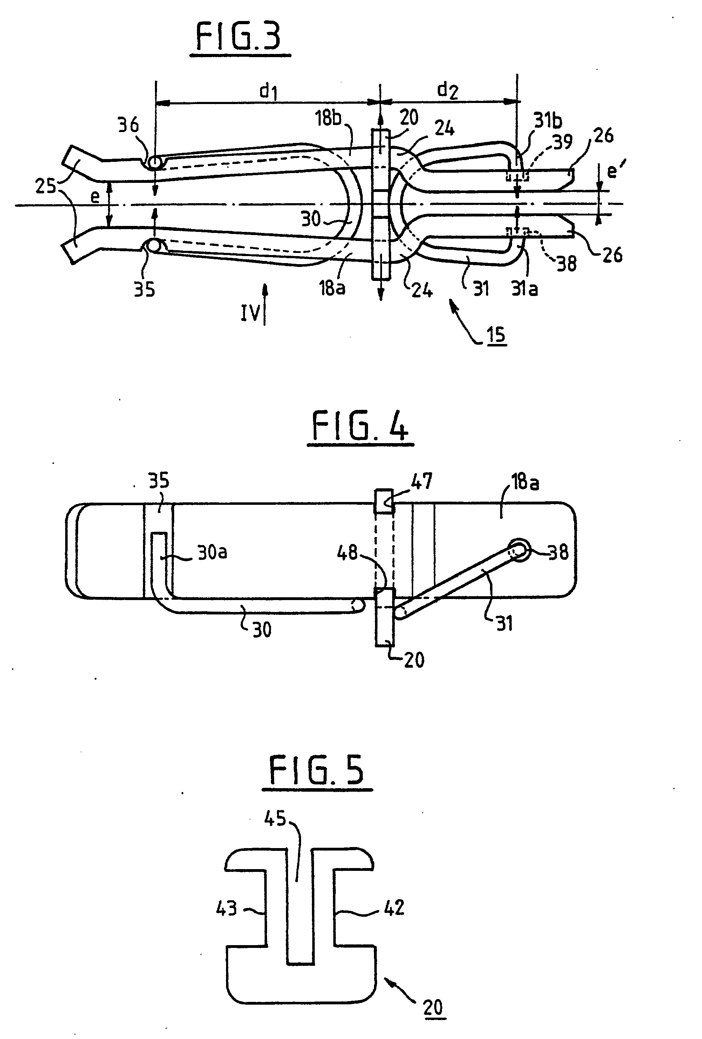

Selon un mode de réalisation préféré illustré sur la figure 3, la pince de contact 15 comprend deux languettes conductrices plates symétriques 18a et 18b, par exemple en cuivre argenté, disposées en regard et maintenues écartées l'une de l'autre au moyen d'une entretoise constituée par un étrier 20 ; dans l'exemple choisi d'une disposition de chant pour la barre omnibus et le couteau conducteur, comme représenté sur les figures 1 et 2, les deux languettes entretoisées 18a et 18b sont montées également de chant dans la cavité du coulisseau 17, lequel est pourvu intérieurement d'un épaulement 22 servant d'appui à l'étrier 20 de la pince lors de son montage dans le coulisseau.

Afin de réduire au maximum l'encombrement que peuvent présenter la pince et le couteau, d'une part, on utilise un couteau dont l'épaisseur est choisie nettement inférieure à celle de la barre omnibus et, d'autre part, on profile chacune des deux languettes 18a et 18b de la pince d'une manière dissymétrique par rapport au plan médian de l'étrier 20 ; chaque branche (18a, 18b) de la pince présente, au voisinage immédiat de l'étrier 20, un col de rétrécissement désigné par la référence 24 sur la figure 3.

En outre, l'extrémité dite d'embrochage de la pince, repérée en 25, est évasée pour faciliter son engagement par translation sur la barre omnibus, tandis que la deuxième extrémité de la pince, repérée en 26, est légèrement chanfreinée.

Comme il apparaît sur la figure 3, les deux branches 18a et 18b de la pince sont reliées entre elles, avantageusement, par deux ressorts de compression 30 et 31 qui sont disposés de part et d'autre de l'étrier 20 et qui sont associés respectivement aux deux extrémités 25 et 26 de la pince de manière à exercer sur chacune d'elles, uniquement en position embrochée (figure 1), le même effort de pression de contact.

Plus en détail, en se reportant aux figures 3 et 4, le ressort 30 est par exemple un fil élastique présentant une forme générale de U dont les deux extrémités comportent chacune un même prolongement coudé dont un seul est visible en 30a sur la figure 4. Ces deux prolongements coudés sont engagés dans deux encoches identiques 35 et 36 ménagées respectivement sur les surfaces latérales externes des deux branches 18a et 18b de la pince, au voisinage de l'extrémité d'embrochage 25.

L'autre ressort 31 est constitué par exemple par un autre fil élastique présentant également une forme générale de U et dont les deux extrémités 31a et 31b (figure 3) sont pliées sensiblement d'équerre en étant tournées l'une vers l'autre et sont retenues en appui dans deux logements identiques d'ancrage 38 et 39 ménagés respectivement sur les surfaces latérales externes des deux branches 18a et 18b de la pince, au voisinage de la deuxième extrémité 26.

Dans la disposition de chant des deux branches de la pince, telle qu'illustrée sur les figures 3 et 4, les deux ressorts de compression 30 et 31 en forme de boucles sont placés en dessous de ces deux branches.

En référence à la figure 3 qui illustre la pince dissymétrique à l'état de repos, c'est-à-dire en équilibre stable obtenu pour la position de sectionnement comme on le verra plus loin, les deux ressorts 30 et 31 sont conçus avec des caractéristiques différentes, tant de dimensionnement (section...) que d'élasticité, déterminées de telle sorte que les deux branches entretoisées 18a et 18b de la pince présentent entre elles, d'une part, à l'extrémité d'embrochage 25, un écartement minimal prédéterminé e légèrement inférieur à l'épaisseur de la barre omnibus et, d'autre part, à la deuxième extrémité 26, un écartement maximal e' supérieur à l'épaisseur du couteau.

La figure 5 représente l'étrier 20 entretoisant les deux branches de la pince. Cet étrier est réalisé à partir d'une pièce conductrice rectangulaire qui est découpée de manière à présenter, en section droite, deux flancs latéraux opposés plats 42 et 43 en forme de U adossés par leurs fonds, ainsi qu'une fente centrale verticale 45 débouchant sur le dessus de l'étrier et présentant une largeur choisie supérieure à l'épaisseur du couteau de façon à autori-

ser le passage de celui-ci lors du déplacement en translation de la pince.

Les deux branches 18a et 18b de la pince sont montées de chant respectivement dans les deux flancs en U de l'étrier 20 en prenant appui sur ceux-ci et sont maintenues en place par engagement des deux ailes latérales de chaque U dans deux encoches 47 et 48 (figure 4) ménagées respectivement sur les bords supérieur et inférieur de la branche associée.

Selon un aspect important de l'invention, les deux branches entretoisées 18a et 18b de la pince dissymétrique décrite ci-dessus, forment chacune deux bras de levier différents ayant un pivot commun constitué par l'étrier 20 (figure 3), lequel sert ainsi d'organe de renvoi de l'effort résultant des forces de serrage exercées par les deux ressorts différents sur chacun de ces deux bras de levier. L'équilibre stable de la pince (figure 3) est ainsi obtenu en plaçant l'étrier 20 à une distance $d_1$, déterminée de façon classique, du point d'application de l'effort exercé par le ressort 30 sur l'extrémité d'embrochage 25, et à une distance $d_2$, inférieure à $d_1$, du point d'application de l'effort exercé par le ressort 31 sur la deuxième extrémité 26.

On va maintenant expliquer la mise en oeuvre de la pince décrite précédemment pour établir une liaison électrique sectionnable entre la barre omnibus et le couteau conducteur, en référence aux figures 1 et 2.

Sur la figure 1 montrant la connexion électrique établie entre la barre omnibus 12 et le couteau conducteur 14, la pince de contact 15 est engagée, à son extrémité d'embrochage 25, sur les flancs latéraux de la barre 12 par écartement de ses deux branches 18a et 18b à l'encontre de la pression exercée par le ressort 30 ; on a représenté en C sur la figure 1 la zone de contact électrique de la pince embrochée sur la barre, cette zone s'étendant sur une distance donnée d'embrochage $d_3$. La deuxième extrémité 26 de la pince coopère avec le couteau 14 sous l'effet de la même force de serrage exercée par le ressort 31 ; on a représenté en C' sur la figure 1 la zone de contact électrique de la pince coopérant avec le couteau.

Dans cette position embrochée, figure 1, on indiquera que l'étrier 20 est flottant, c'est-à-dire qu'un léger jeu existe entre ses flancs latéraux et les surfaces latérales internes associées des deux branches de la pince.

Par translation du coulisseau porte-pince 17 selon la direction de débrochage indiquée par la flèche F de la figure 1, la pince 15 se sépare de la barre omnibus 12, ce qui provoque, par l'effet de levier produit par l'action des ressorts et articulé sur l'étrier 20, d'une part, le rappel à leur écartement minimal e (figure 2) des deux branches de la pince à leur première extrémité 25 et, d'autre part, l'ouverture à leur écartement maximal e' (figure 2) desdites branches à leur deuxième extrémité 26 ; ainsi, dès le débrochage obtenu en fin de course $d_3$, les deux branches 18a et 18b de la pince prennent appui par basculement contre les flancs latéraux de l'étrier et se séparent donc du couteau 14. On a représenté en $e_1$ sur la figure 2 le jeu existant de part et d'autre du couteau 14 au niveau de la deuxième extrémité 26 de la pince après débrochage.

Dans cette position débrochée, la pince se trouve donc en équilibre stable, sans frottement sur le couteau.

Dès lors, en poursuivant le mouvement de translation du coulisseau 17, la pince débrochée 15 vient occuper sa position sectionnée (figure 2) pour laquelle son extrémité 25 est située à une distance donnée de sectionnement $d_4$, supérieure à $d_3$ dans l'exemple illustré aux figures 1 et 2, de la barre omnibus 12 ; au cours du déplacement de la pince, la fente de guidage 45 (figure 2) ménagée dans l'étrier 20 autorise le passage du couteau 14.

Lorsqu'après sectionnement, on désire réembrocher la pince sur la barre omnibus, le coulisseau porte-pince 17 est alors entraîné en translation selon la direction d'embrochage indiquée par la flèche F' de la figure 2. Par l'effet de double levier procuré par chacune des deux branches de la pince, l'extrémité d'embrochage 25 de la pince vient enserrer la barre 12 par écartement de ses deux branches 18a et 18b à l'encontre de la force de serrage exercée par le ressort 30, tandis que la deuxième extrémité 26 de la pince vient enserrer le couteau 14 par rapprochement desdites branches soumises à la même force de serrage exercée par le ressort 31, comme illustré à la figure 1.

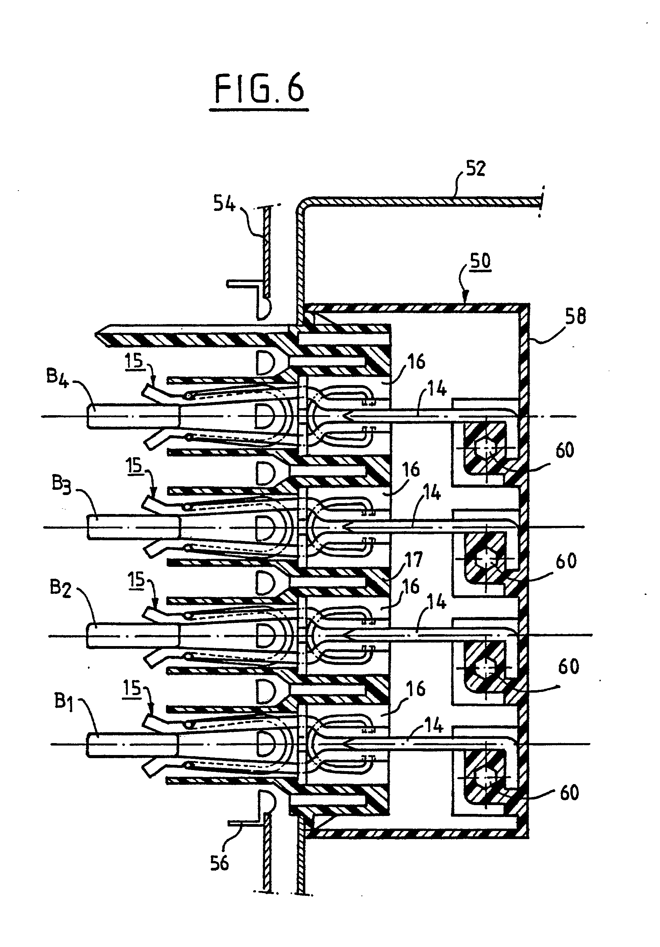

Sur la figure 6, on a représenté en 50 un organe de prise de courant et de sectionnement à pinces multiples identiques, chacun d'elles étant du type décrit précédemment, qui est utilisé dans un système de distribution de courant électrique à partir d'un jeu de barres omnibus parallèles non coplanaires ; un tel organe de prise de courant et de sectionnement est agencé entre ledit jeu de barres et des appareils interrupteurs tels que, par exemple, des contacteurs, disjoncteurs, contacteurs-disjoncteurs ou interrupteurs proprement dits, auxquels sont éventuellement associés des dispositifs annexes tels que des auxiliaires de protection, des fusibles, des auxiliaires de télécommande.

Les barres omnibus de distribution illustrées sur la figure 6 sont disposées par exemple verticalement et sont par exemple au nombre de quatre ($B_1$ - $B_4$) correspondant dans ce cas aux conducteurs d'un réseau électrique triphasé avec neutre ; bien entendu, les barres peuvent être en nombre inférieur ou supérieur.

L'organe 50 de prise de courant et de sectionnement est un bloc moulé en matière isolante, de forme générale sensiblement parallélépipédique, qui est rapporté sur une partie fixe 52 d'un support venant s'appliquer latéralement sur un flanc vertical 54 d'une enveloppe de protection disposée autour des barres.

Le bloc 50 est équipé des pinces 15 de prise de courant, au nombre de quatre dans l'exemple choisi, qui viennent s'embrocher sur les barres associées $B_1$ - $B_4$ par introduction dans une trappe 56 prévue dans le flanc 54 de l'enveloppe perpendiculaire aux plans des barres.

Le coulisseau porte-pinces 17 mobile en translation se présente également sous forme d'un bloc parallélépipédique moulé en matière isolante et comporte une pluralité de cavités traversantes 16, au nombre de quatre dans l'exemple choisi, aménagées côte à côte parallèlement aux plans des barres ; les pinces 15 sont logées à demeure dans ces cavités associées du coulisseau, lequel est commandé par un arbre fixe rotatif (non figuré) dont l'axe s'étend dans une direction perpendiculaire au sens de déplacement du coulisseau. L'arbre rotatif est lui-même actionné par un organe de commande (non figuré) du type manuel ou autre.

La commande du mouvement de translation du coulisseau s'effectue en réponse à la rotation de l'arbre grâce à un moyen approprié de transformation de mouvement, du type par exemple à pignon et crémaillère.

Le bloc 50, figure 6, présente également une partie fixe 58 qui porte, d'une part, l'arbre rotatif de commande du coulisseau et, d'autre part, des moyens fixes de raccordement électrique par exemple à vis 60 avec des bornes de puissance de l'appareil interrupteur associé (non figuré) ; chaque borne 60 est reliée électriquement à la pince 15 associée au moyen du couteau conducteur 14 dont la première extrémité est fixée dans la borne 60 et dont la deuxième extrémité est engagée entre les deux contacts de la pince 15. Sur la figure 6, on a illustré le bloc 50 de prise de courant et de sectionnement en position embrochée.

Les opérations de sectionnement par débrochage des pinces et de réembrochement s'effectuent d'une manière identique à celle décrite précédemment dans le cadre d'une seule pince en référence aux figures 1 et 2.

## Revendications

1. Dispositif pour établir une connexion électrique sectionnable entre un conducteur plat fixe constitué par un couteau (14), et une barre omnibus (12) placée en regard, dans un même plan, comportant une pince de contact (15) dont les deux branches sensiblement parallèles à ce plan sont formées respectivement par deux languettes (18a, 18b) conductrices plates symétriques disposées en regard l'une de l'autre et reliées entre elles par au moins un ressort de compression (30 ; 31), la pince étant portée par une pièce isolante (17) disposée parallèlement au plan de la barre et mobile en translation sous l'action d'un organe de commande pour occuper soit une position de connexion dans laquelle une première extrémité (25) de la pince est engagée sur la barre (12) par écartement des branches à l'encontre de la pression exercée par le ressort, tandis que sa deuxième extrémité (26) coopère avec le couteau (14), soit une position de sectionnement dans laquelle la première extrémité (25) de la pince est séparée de la barre (12) par débrochage, caractérisé en ce que les deux branches de la pince sont entretoisées et maintenues écartées l'une de l'autre par un étrier (20) contre lequel elles prennent appui par basculement produit sous l'action du ressort après débrochage de la pince par translation, de sorte qu'en position de sectionnement, les parties des deux branches de la pince situées du côté de la seconde extrémité (26) sont disposées de part et d'autre du couteau (14) sans coopérer avec celui-ci.

2. Dispositif selon la revendication 1, caractérisé en ce que l'étrier (20) est une pièce découpée présentant deux flancs latéraux opposés plats (42, 43) en forme de U adossés par leurs fonds, les deux branches de la pince étant supportées et maintenues respectivement par ces deux flancs en U.

3. Dispositif selon l'une des revendications 1 ou 2, caractérisé en ce que le couteau (14) s'étend dans une direction parallèle au sens de déplacement de la pièce isolante porte-pince (17), et en ce que l'étrier (20) présente une fente centrale de guidage (45) perpendiculaire à cette direction pour autoriser le passage du couteau (14) lors du déplacement en translation de la pièce porte-pince.

4. Dispositif selon l'une des revendications 1 à 3, caractérisé en ce que les deux branches de la pince sont reliées entre elles par deux ressorts de compression (30, 31) qui sont disposés de part et d'autre de l'étrier (20) et qui sont associés respectivement aux deux extrémités (25, 26) de la pince en exerçant sur chacune d'elles, seulement en position de connexion, le même effort de pression de contact.

5. Dispositif selon la revendication 4, caractérisé en ce que chaque ressort est constitué par un fil élastique présentant une forme générale de U, en ce que les deux extrémités du ressort (30) agissant pour l'embrochage sur la barre présentent chacune un prolongement coudé, ces prolongements étant engagés dans deux encoches (35, 36) practiquées respectivement sur les surfaces externes des deux branches de la pince, et en ce que les deux extrémités de l'autre ressort (31) agissant pour le serrage sur le couteau sont pliées sensiblement d'équerre en étant tournées l'une vers l'autre et sont retenues dans deux logements d'ancrage (38, 39) ménagés respectivement sur les surfaces externes des deux branches de la pince.

6. Dispositif selon l'une des revendications 4 et 5, caractérisé en ce que les deux branches de la pince présentent chacune un profil dissymétrique par rapport au plan médian de l'étrier (20), et en ce que les deux ressorts (30, 31) présentent des caractéristiques différentes telles qu'en position de sectionnement, l'écartement entre les deux branches de la pince à sa première extrémité (25) d'embrochage est inférieur à l'épaisseur de la barre et celui existant à sa deuxième extrémité (26) est supérieur à l'épaisseur du couteau.

7. Dispositif selon l'une des revendications précédentes, caractérisé en ce que la première extrémité (25) d'embrochage de la pince est évasée pour faciliter son engagement par translation sur la barre (12).

8. Bloc de prise de courant et de sectionnement pour un système de distribution à barres omnibus parallèles non coplanaires, comportant :
– une partie fixe (58) portant une pluralité de couteaux conducteurs parallèles (14), en nombre égal à celui des barres, et placés chacun en regard d'une barre, dans un même plan, ainsi que des moyens (60) pour raccorder électriquement l'une des extrémités des couteaux à au moins un appareil interrupteur ;

— une partie mobile en translation comprenant un coulisseau isolant (17) susceptible d'être actionné par des moyens de commande, le coulisseau se composant d'une pluralité de cavités traversantes (16), en nombre égal à celui des couteaux, et aménagées côte à côte parallèlement aux plans des barres, chaque couteau étant engagé à son autre extrémité dans une cavité associée ; caractérisé en ce que chaque cavité (16) du coulisseau loge un dispositif pour établir une connexion électrique sectionnable entre un couteau et sa barre omnibus associée, tel que défini selon l'une quelconque des revendications précédentes.

## Claims

1. A device for establishing a disconnectable electric connection between a fixed flat conductor formed by a knife (14) and an omnibus bar (12) placed opposite, in the same plane, having a contact clip (15) whose two legs, substantially parallel to this plane, are formed respectively by two symmetrical flat conducting tongues (18a, 18b) disposed opposite each other and connected together by at least one compression spring (30, 31), the clip being carried by an insulating piece (17) disposed parallel to the plane of the bar and movable in translation under the action of a control member so as to occupy either a connection position in which a first end (25) of the clip is engaged on the bar (12) by forcing apart the legs against the pressure exerted by the spring, whereas its second end (26) cooperates with the knife (14), or a disconnecting position in which the first end (25) of the clip is separated from the bar (12) by unclipping, characterized in that said two legs of the clip are spaced apart and held apart from each other by a stirrup (20) against which they by a pivoting movement produced under the action of the spring after unclipping of the clip by translation, so that in the disconnection position, the portions of the two legs of the clip located on the side of its second end (26) are disposed on each side of the knife (14) without cooperating therewith.

2. The device according to claim 1, characterized in that said stirrup (20) is a stamped piece having two flat opposite lateral sides (42, 43) in the form of a U disposed back to back by their bottoms, the two legs of the clip being supported and held respectively by these two U shaped sides.

3. The device according to one of claims 1 or 2, characterized in that said knife (14) extends in a direction parallel to the direction of movement of the clip carrying insulating piece (17) and in that said stirrup (20) has a central guide slit (45) perpendicular to this direction for allowing passage of the knife (14) during the translational movement of the clip-carrying piece.

4. The device according to one of claims 1 to 3, characterized in that the two legs of the clip are connected together by two compression springs (30, 31) which are disposed on each side of the stirrup (20) and which are associated respectively with the two ends (25, 26) of the clip while exerting on each of them, only in the connection position, the same contact pressure force.

5. The device according to claim 4, characterized in that each spring is formed by a resilient wire having the general shape of a U, in that the two ends of the spring (30) acting for clipping on the bar each have a bent extension, these extensions being engaged in two recesses (35, 36) formed respectively in the external surfaces of the two legs of the clip, and in that the two ends of the other spring (31) operatively clamping on the knife are bent substantially at right angles towards each other and are retained in two anchoring housings (38, 39) formed respectively in the external surfaces of the two legs of the clip.

6. The device according to one of the claims 4 and 5, characterized in that the two legs of the clip each have a dissymmetrical profile with respect to the median plane of the stirrup (20) and in that the two springs (30, 31) have different characteristics such that, in the disconnected position, the spacing between the two legs of the clip at its first clipping end (25) is less than the thickness of the bar and that existing at its second end (26) is greater than the thickness of the knife.

7. The device according to one of the preceding claims, characterized in that the first clipping end (25) of the clip is widened out so as to facilitate engagement thereof by translation on the bar (12).

8. A current tapping and disconnecting block for a distribution system with non coplanar parallel omnibus bars, including:
— a fixed part (58) carrying a plurality of parallel conducting knives (14) in number equal to that of the bars, and each placed opposite a bar, in the same plane, as well as means (60) for electrically connecting one of the ends of the knives to at least one switch apparatus;
— a part movable in translation including an insulating slider (17) able to be actuated by control means, the slider having a plurality of through cavities (16), in number equal to that of the knives, and formed side by side parallel to the planes of the bars, each knife being engaged at its other end in an associated cavity characterized in that each cavity (16) of the slider houses a device for establishing a disconnectable electric connection between a knife and its associated omnibus bar, such as defined in any one of the preceding claims.

## Patentansprüche

1. Vorrichtung, um eine trennbare elektrische Verbindung herzustellen, zwischen einem, aus einem Messer (14) bestehenden ortsfesten Flachleiter und einer gegenüber in der gleichen Ebene angeordneten Stromschiene (12), die mit einer Kontaktklemme (15) versehen ist, deren beide, im wesentlichen zu besagter Ebene parallele Schenkel jeweils von zwei flachen symmetrischen leitenden Lamellen (18a, 18b) gebildet werden, die einander gegenüberliegend angeordnet und durch mindestens eine Druckfeder (30, 31) verbunden sind, wobei die Klemme von einem Isolierteil (17) gehalten wird, welches parallel zur Stromschienenebene angeordnet und querverschiebbar ist, wenn es von einem Steuerorgan beaufschlagt wird, um entweder eine Verbindungsstellung einzunehmen, in der ein erstes Ende (25) der Klemme auf der Schiene (12) angeordnet ist, durch Spreizen der Schenkel gegen den von der Druckfeder ausgeübten Druck, während ihr anderes Ende (26) mit dem Messer (14) zusammenwirkt, oder aber eine Trennstellung, in der das erste Ende (25) der Klemme von der Schiene (12) durch Abziehen getrennt ist, dadurch gekennzeichnet, daß die beiden Schenkel der Klemme durch einen Bügel (20) abgestreift und voneinander getrennt sind, gegen den sie sich stützen, wenn sie unter der Wirkung der Feder nach dem Abziehen der Klemme durch Verschiebung gekippt werden, so daß, in der Trennstellung, die auf der Seite des zweiten Endes (26) angeordneten Teile der beiden Schenkel der Klemme sich beidseitig des Messers (14) befinden, aber nicht mit ihm zusammenarbeiten.

2. Vorrichtung nach Anspruch 1, dadurch gekennzeichnet, daß der Bügel (20) ein ausgestanztes Teil ist, mit zwei gegenüberliegenden flachen Seitenteilen (42, 43) in Form eines U, die durch ihre Bodenfläche verbunden sind, und die beiden Schenkel der Klemme jeweils durch die besagten beiden U-förmigen Seitenteile abgestützt und gehalten werden.

3. Vorrichtung nach einem der Ansprüche 1 oder 2, dadurch gekennzeichnet, daß das Messer (14) sich in eine Richtung parallel zur Verschiebungsrichtung des Isolierteiles (17) ersteckt, welches die Klemme trägt, und daß der Bügel (20) einen mittleren Führungsschlitz (45) quer zu besagter Richtung aufweist, damit das Messer (14) sich bei einer Verschiebung des Klemmenträgerteiles hinbewegen kann.

4. Vorrichtung nach einem der Ansprüche 1 bis 3, dadurch gekennzeichnet, daß die beiden Schenkel der Klemme durch zwei Druckfedern (30, 31) miteinander verbunden sind, die beidseitig des Bügels (20) angeordnet und jeweils den beiden Enden (25, 26) der Klemme zugeordnet sind und auf jedes dieser Enden nur in der Verbindungsstellung denselben Kontaktdruck ausüben.

5. Vorrichtung nach Anspruch 4, dadurch gekennzeichnet, daß jede Feder aus einem elastischen Draht besteht, der die allgemeine Form eines U hat, daß die beiden Enden der Feder (30), die beim Aufstecken auf die Schiene zur Wirkung kommt, jeweils eine gebogene Verlängerung aufweisen und besagte Verlängerungen in zwei, jeweils in den Außenflächen der beiden Klemmenschenkel angebrachte Aussparungen (35, 36) eingreifen, und daß die beiden Enden der anderen Feder (31) die zur Einklemmung des Messers zur Wirkung kommen, im wesentlichen rechtwinklig gebogen, einander zugekehrt sind und in zwei jeweils in den Außenflächen der beiden Klemmenschenkel angebrachten Verankerungesbehausungen (38, 39) gehaltert werden.

6. Vorrichtung nach einem der Ansprüche 4 und 5, dadurch gekennzeichnet, daß die beiden Klemmenschenkel jeweils ein asymmetrisches Profil im Verhältnis zur Mittelebene des Bügels (20) aufweisen und die beiden Federn (30, 31) unterschiedliche Kennzeichen aufweisen, so daß in der Trennstellung der Abstand zwischen den beiden Schenkeln der Klemme am ersten Aufsteckende (25) geringer ist, als die Dicke der Schiene und der Abstand am zweiten Ende (26) größer als die Dicke des Messers ist.

7. Vorrichtung nach einem der vorhergehenden Ansprüche, dadurch gekennzeichnet, daß das erste Aufsteckende (25) der Klemme konisch erweitert ist, um das Aufstecken auf die Schiene (12) durch Verschiebung zu erleichtern.

8. Stromabzweig- und -trenneinheit für ein Verteilersystem, mit parallelen, nicht koplanaren Verteilerschienen, mit:
– einem ortsfesten Teil (58), das eine Vielzahl von parallelen, leitenden Messern (14) trägt, deren Zahl den Schienen entspricht und die jeweils einer Schiene gegenüber in derselben Ebene angeordnet sind, sowie Mittel (60), um eines der Messerenden elektrisch an mindestens ein Schaltgerät anzuschließen;
– einem verschiebbaren Teil mit einem Isolierschieber (17), der durch Steuermittel betätigt werden kann, wobei der Schieber aus einer Vielzahl von durchgehenden Austiefungen (16) besteht, deren Anzahl der der Messer entspricht und die nebeneinander parallel zu den Schienenebenen angeordnet sind und jedes Messer an seinem anderen Ende in eine zugeordnete Aushöhlung eingeführt wird, dadurch gekennzeichnet, daß jede Austiefung (16) des Schiebers eine Vorrichtung nach einem der vorhergehenden Ansprüche aufweist, zur trennbaren elektrischen Verbindung zwischen einem Messer und seiner zugeordneten Schiene.

## FIG. 1

## FIG. 2

## FIG.3

## FIG.4

## FIG.5

# FIG.6